# FASCICULE DE BREVET EUROPEEN

(11) **EP 0 832 676 B1**
(45) Date de publication et mention de la délivrance du brevet: **26.11.2003**
(21) Numéro de dépôt: 97402178.4
(22) Date de dépôt: 18.09.1997
(51) Int. Cl.: B01D 39/20

(54) **Procédé et dispositif de filtrage de fines particules dans des fluides**
Verfahren und Vorrichtung zur Filterung von feinen Teilchen in Flüssigkeiten
Process and device for filtering fine particles in fluids

(30) Priorité: 27.09.1996 FR 9611922
(43) Date de publication de la demande: 01.04.1998
(73) Titulaire: Institut Français du Pétrole, 92852 Rueil-Malmaison Cedex (FR)
(72) Inventeur: Behar, Emmanuel, 95000 Jouy le Moutier (FR); Werner, Alexander, 75116 Paris (FR)

(56) Documents cités:
- US-A- 2 256 145
- US-A- 4 458 528
- US-A- 4 595 667
- US-A- 4 910 758

## Description

La présente invention concerne un procédé et un dispositif de filtrage de particules dans des fluides.

Le procédé selon l'invention peut servir pour toutes sortes d'applications où l'on a séparé mécaniquement des particules de sections différentes pour ne retenir que celles de sections inférieures à un certain seuil. C'est le cas notamment dans les industries pétrolières où l'on cherche à isoler mécaniquement certaines fractions lourdes du pétrole, qu'il s'agisse de résines dont le diamètre moyen peut varier entre quelques 10 à 70 Ångströms (Å), ou d'asphaltènes dont le diamètre moyen est compris dans la fourchette 10-200 Å. C'est le cas également quand on a à sélectionner des polymères, des protéines etc.

Elle trouve aussi des applications notamment en physico-chimie où il s'agit d'étudier par exemple la répartition (sous forme d'histogramme par exemple) des différents constituants d'un mélange en fonction d'un critère qui peut être soit leur section, soit leur volume ou encore leur masse molaire. Ce type d'analyse est généralement conduit en étudiant au préalable le spectre de diffusion des rayons X et/ou des neutrons en fonction de l'angle ou du vecteur de diffusion. Pour passer de ce spectre à la répartition recherchée, il est nécessaire de choisir un modèle géométrique représentatif de la répartition des particules en ce qui concerne aussi bien leur forme: sphères, disques etc., que leurs sections. Connaître par un filtrage sélectif la répartition des particules dans certaines fourchettes de taille, permet de lever les incertitudes sur le modèle et par conséquent d'arriver plus sûrement à l'histogramme recherché.

Différents types de filtre existent avec des capacités de filtrage variées. Parmi les filtres connus, on peut citer par exemple ceux à base d'esters cellulosiques, de polytétrafluoroéthylène ou de difluorure de polyvinylidène. Ils présentent des pores avec des diamètres moyens relativement grands qui peuvent varier entre plusieurs centaines et plusieurs milliers d'Ångströms avec des températures maximales d'utilisation de l'ordre de 100°C à 200°C

On connaît également les filtres réalisés à partir d'argiles ou de zéolites dont les pores peuvent être extrêmement fins, de l'ordre de quelques Å, qui ont reçu des applications très variées en chimie notamment, et qui servent par exemple pour sélectionner les molécules à chaînes linéaires. Mais leur coût est relativement élevé.

Par le brevet US 2.256.145 ou 4.458.528 notamment, il est connu aussi d'utiliser des échantillons de roche poreuse pour filtrer des fluides.

Le procédé selon l'invention permet de réaliser une ultrafiltration de particules dans des fluides, en les faisant passer au travers d'un élément filtrant réalisé à partir d'une roche poreuse prélevée dans le sous-sol. Il est caractérisé en ce qu'il comporte une obturation sélective de pores de la roche par une injection d'une substance de colmatage à une pression bien définie choisie en fonction de la pression capillaire régnant dans les pores à obturer.

On utilise par exemple un échantillon de roche mère avec des micropores de diamètre moyen inférieur typiquement à quelques dizaines d'Ångströms.

Suivant un mode de mise en oeuvre, le procédé comporte en outre une élimination thermique des particules retenues dans l'élément filtrant, en le portant à une température de plusieurs centaines de degrés centigrades.

Suivant un autre mode de mise en oeuvre on renforce la sélectivité du filtrage en superposant au moins un autre élément filtrant à l'élément filtrant réalisé à partir d'une roche poreuse.

Le dispositif d'ultrafiltration de particules en suspension dans des fluides selon l'invention comprend un boîtier renfermant au moins un élément filtrant réalisé à partir d'un échantillon de roche poreuse, ce boîtier étant pourvu d'une entrée connectée en permanence à un conduit d'injection de fluides, et d'une sortie connectée à un conduit d'évacuation, les deux entrées communiquant l'un avec l'autre en permanence au travers de l'élément filtrant, et les pores de la roche sont sélectivement obturés par injection d'une substance de colmatage à une pression bien définie choisie en fonction de la pression capillaire régnant dans les pores à obturer.

L'élément filtrant du dispositif est taillé par exemple dans un échantillon de roche mère avec des micropores de diamètre moyen inférieur typiquement à quelques dizaines d'Ångströms.

Suivant un mode de réalisation, le dispositif comporte à l'intérieur du boîtier au moins un deuxième élément filtrant fabriqué à partir de substances poreuses superposé à l'élément filtrant réalisé à partir de roche mère.

Le deuxième élément filtrant est taillé par exemple dans une roche poreuse avec des tailles moyennes de pores différentes de celles des pores du premier élément filtrant.

Le dispositif selon l'invention peut être utilisé par exemple pour la filtration de fractions lourdes telles que des résines, ou des asphaltènes en suspension dans des fluides pétroliers, ou pour la filtration de polymères ou de protéines.

L'utilisation d'un tel filtre dont les pores sont sélectivement colmatés est avantageuse car l'élément filtrant peut être taillé à partir de roches mères facilement disponibles. On peut utiliser par exemple les carottes qui sont de toute façon extraites pour analyse durant les phases d'exploration pétrolière. Les filtres obtenus sont peu coûteux. En outre, les éléments filtrants obtenus à partir de telles roches sont facilement régénérables après utilisation, car ils peuvent résister à des températures élevées nécessaires à l'élimination par voie thermique de la matière organique retenue dans les pores. Ces filtres conviennent bien pour de nombreuses applications dans l'industrie pétrolière.

D'autres caractéristiques et avantages de l'invention apparaîtront à la lecture de la description d'un mode de réalisation décrit ci-après à titre d'exemple non limitatif, en se référant au dessin annexé où :

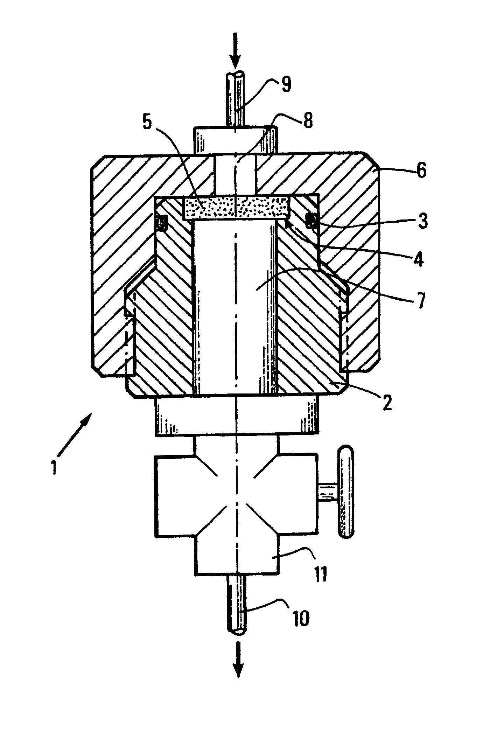

- la Fig.1 est une vue schématique en coupe d'un boîtier de filtrage avec un élément filtrant constitué d'un disque mince réalisé à partir d'une roche poreuse.

Le tableau comparatif ci-après montre à titre d'exemple, les dimensions typiques relativement grandes des pores des roches-réservoirs dans lesquelles viennent s'accumuler les hydrocarbures, celles beaucoup plus fines des pores des roches-mères, et par comparaison les dimensions observées des particules de résines et d'asphaltènes que l'on cherche à retenir par filtrage pour certaines applications, ainsi que les dimensions typiques des pores de membranes de filtrage réalisées par exemple en ester mixte de cellulose, intermédiaires entre les dimensions des pores respectivement des roches-réservoirs et des roches-mères.

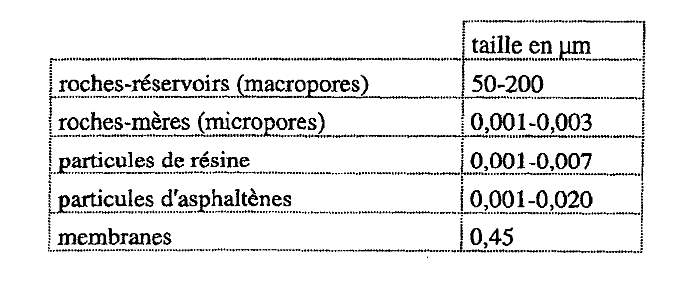

Un filtre réalisé à partir d'une roche micro-poreuse telle qu'une roche-mère convient bien, on le voit, pour retenir par exemple de très fines particules colloïdales (les particules de résines ou d'asphaltènes par exemple) et ceci d'autant plus que les opérations de filtration qui sont menées se déroulent à des pressions relativement élevées et des températures élevées, que d'autres types de filtre de porosité comparable ne peuvent supporter sans se dégrader rapidement.

Pour certaines applications où les particules à retenir par filtrage sont plus grosses, on peut choisir un autre type de roche poreuse avec des diamètres de pores appropriés. Des particules de diamètre supérieur à 200 µm par exemple, peuvent être arrêtées par un élément filtrant taillé dans une roche-réservoir.

Le porte-filtre illustré à la Fig. 1, comporte par exemple un boîtier 1 en deux parties: un élément-support 2 muni de joints d'étanchéité 3, pourvu à sa partie supérieure d'une cavité 4 pour un disque 5 taillé dans une roche poreuse avec un diamètre de pores adapté au type de particules à filtrer. sur lequel vient se visser un couvercle 6. L'élément-support et le couvercle sont pourvus respectivement d'alésages axiaux 7, 8 communiquant l'un avec l'autre au travers du disque filtrant, ainsi que de moyens de fixation d'un conduit d'injection 9 et d'un conduit de sortie 10. Une vanne 11 est interposée sur le conduit de sortie par exemple.

Dans le cas où le diamètre des pores de la roche poreuse utilisée présente une disparité telle que certaines particules à filtrer sont malgré tout susceptibles de passer au travers des pores les plus gros, il est possible d'obturer ceux-ci par une injection d'une substance telle que de l'araldite par exemple. Le bouchage sélectif est obtenu de manière connue en soi, en modulant la pression d'injection de la substance en fonction de la pression capillaire correspondant aux pores à obturer.

Il est possible également de superposer deux éléments filtrants différents, l'un au moins étant réalisé dans une galette taillée dans une roche poreuse, de façon à diminuer la probabilité de passage des particules de diamètre supérieur à une certaine fourchette prédéfinie.

Dans le boîtier porte-filtre de la Fig.1 par exemple, on peut superposer deux éléments filtrants. Le premier est par exemple une galette réalisée dans une roche-mère, telle que l'élément 5. Par dessus, on place un autre filtre, qu'il s'agisse d'un filtre classique à base d'esters cellulosiques par exemple. ou d'une autre galette taillée dans une autre roche poreuse avec des diamètres de pores plus gros, telle qu'une roche-réservoir.

## Revendications

1. Procédé d'ultrafiltration de particules dans des fluides, dans lequel on fait passer les fluides à filtrer au travers d'un élément filtrant réalisé à partir d'une roche poreuse prélevée dans le sous-sol, **caractérisé en ce qu'**il comporte une obturation sélective de pores de la roche par une injection d'une substance de colmatage à une pression bien définie choisie en fonction de la pression capillaire régnant dans les pores à obturer.

2. Procédé d'ultrafiltration selon la revendication 1, **caractérisé en ce que** l'on utilise un échantillon de roche mère avec des micropores de diamètre moyen inférieur typiquement à quelques dizaines d'Ångströms.

3. Procédé d'ultrafiltration selon la revendication 1 ou 2, **caractérisé en ce qu'**il comporte en outre une élimination thermique des particules retenues dans l'élément filtrant, en le portant à une température de plusieurs centaines de degrés centigrades.

4. Procédé selon l'une des revendications précédentes, **caractérisé en ce que** l'on renforce la sélectivité du filtrage en superposant au moins un autre élément filtrant à l'élément filtrant réalisé à partir d'une roche poreuse.

5. Dispositif d'ultrafiltration de particules en suspension dans des fluides comprenant un boîtier (1) renfermant au moins un élément filtrant (5) réalisé à partir d'un échantillon de roche poreuse, **caractérisé en ce que** le boîtier étant pourvu d'une entrée connectée en permanence à un conduit d'injection de fluides, et d'une sortie connectée à un conduit d'évacuation, les deux entrées communiquant l'un avec l'autre en permanence au travers de l'élément filtrant, et les pores de la roche sont sélectivement obturés par injection d'une substance de colmatage à une pression bien définie choisie en fonction de la pression capillaire régnant dans les pores à obturer.

6. Dispositif d'ultrafiltration selon la revendication 5 , **caractérisé en ce que** l'élément filtrant (5) est taillé dans un échantillon de roche mère avec des micropores de diamètre moyen inférieur typiquement à quelques dizaines d'Ångströms.

7. Dispositif selon l'une des revendications 5 ou 6 , **caractérisé en ce qu'**il comporte au moins un deuxième élément filtrant superposé à l'élément filtrant (5) réalisé à partir de roche mère, à l'intérieur du boîtier.

8. Dispositif d'ultrafiltration selon la revendication 7, **caractérisé en ce que** le deuxième élément filtrant est fabriqué à partir de substances poreuses.

9. Dispositif d'ultrafiltration selon la revendication 8, **caractérisé en ce que** le deuxième élément filtrant est taillé dans une roche poreuse avec des tailles moyennes de pores différentes de celles des pores du premier élément filtrant.

10. Application du dispositif d'ultrafiltration selon l'une des revendications 5 à 9 pour la filtration de fractions lourdes telles que des résines, ou des asphaltènes en suspension dans des fluides pétroliers.

11. Application du dispositif d'ultrafiltration selon l'une des revendications 5 à 9 pour la filtration de polymères ou de protéines.

## Patentansprüche

1. Verfahren zur Ultrafiltration von Partikeln in Fluiden, bei dem man die zu filtrierenden Fluide durch ein filtrierendes Element passieren lässt, das ausgehend von einem porösen aus dem Untergrund entnommenen Gestein hergestellt wird, **dadurch gekennzeichnet, dass** es eine selektive Verstopfung von Poren des Gesteins durch eine Injektion einer Verschmutzungs- oder Verstopfungssubstanz bei einem genau definierten Druck umfasst, der als Funktion des in den zu verstopfenden Poren herrschenden Kapillardrucks gewählt ist.

2. Verfahren zur Ultrafiltration nach Anspruch 1, **dadurch gekennzeichnet, dass** man eine Muttergesteinsprobe mit Mikroporen von einem mittleren Durchmesser verwendet, der typischerweise unter etlichen 10 Ångström liegt.

3. Verfahren zur Ultrafiltration nach Anspruch 1 oder 2, **dadurch gekennzeichnet, dass** es im übrigen eine thermische Eliminierung der Partikel umfasst, die im filtrierenden Element zurückgehalten wurden, indem man es auf eine Temperatur von etlichen 100°C bringt.

4. Verfahren nach einem der vorhergehenden Ansprüche, **dadurch gekennzeichnet, dass** man die Selektivität der Filtrierung verstärkt, indem man wenigstens ein anderes filtrierendes Element dem filtrierenden aus einem Muttergestein realisierten Element überlagert.

5. Vorrichtung zur Ultrafiltration von in Suspension in Fluiden befindlichen Partikeln, ein Gehäuse (1) umfassend, das wenigstens ein filtrierendes Element (5) einschließt, das aus einer porösen Gesteinsprobe realisiert wurde, **dadurch gekennzeichnet, dass** das Gehäuse mit einem Eingang, der permanent mit einer Fluidinjektionsleitung verbunden ist und mit einem Ausgang versehen ist, der mit einer Abzugsleitung verbunden ist, wobei die beiden Eingänge miteinander dauernd über das filtrierende Element in Verbindung stehen, und die Poren des Gesteins selektiv durch eine Injektion einer Verstopfungs- oder Verschmutzungssubstanz bei einem wohl definierten Druck verschlossen werden, der als Funktion des in den zu verschließenden Poren herrschenden Kapillardrucks gewählt ist.

6. Vorrichtung zur Ultrafiltration nach Anspruch 5, **dadurch gekennzeichnet, dass** das filtrierende Element (5) in einer Muttergesteinsprobe mit Mikroporen geschnitten ist, deren mittlerer Durchmesser typischerweise unterhalb etlichen 10 Ångström liegt.

7. Vorrichtung nach Anspruch 5 oder 6, **dadurch gekennzeichnet, dass** sie wenigstens ein zweites filtrierendes Element umfasst, das dem ersten aus Muttergestein realisierten Element (5) im Inneren des Gehäuses überlagert ist.

8. Vorrichtung zur Ultrafiltration nach Anspruch 7, **dadurch gekennzeichnet, dass** das zweite filtrierende Element aus porösen Substanzen hergestellt ist.

9. Vorrichtung zur Ultrafiltration nach Anspruch 8, **dadurch gekennzeichnet, dass** das zweite filtrierende Element in ein poröses Gestein von mittlerer Porenabmessung geschnitten ist, die unterschiedlich zu den Poren des ersten filtrierenden Elements sind.

10. Anwendung der Ultrafiltrationsvorrichtung nach einem der Ansprüche 5 bis 9 zur Filtration schwerer Fraktionen wie Harzen oder Asphaltenen in Suspension in Erdölfluiden.

11. Anwendung der Ultrafiltrationsvorrichtung nach einem der Ansprüche 5 bis 9 zur Filtration von Polymeren oder Proteinen.

## Claims

1. Process for the ultrafiltration of particles in fluids, in which the fluids to be filtered are passed through a filter element made from a porous rock taken from the bedrock, **characterised in that** it uses the selective blocking of the pores in the rock by the injection of a clogging substance at a well-defined pressure chosen according to the capillary pressure prevailing in the pores to be blocked.

2. Ultrafiltration process according to Claim 1, **characterised in that** one uses a sample of source rock with pores having a mean diameter typically smaller than a few tens of Ångströms.

3. Ultrafiltration process according to Claim 1 or Claim 2, **characterised in that** it also includes the thermal elimination of the particles retained in the filter element by bringing them to a temperature of several hundred degrees centigrade.

4. Ultrafiltration process according to any of the previous Claims, **characterised in that** the selectivity of filtration is enhanced by stacking at least one other filter element made from a porous rock.

5. Device for the ultrafiltration of particles in fluids comprising an enclosure (1) containing at least one filter element (5) made from a sample of porous rock, **characterised in that** the enclosure has an inlet connected permanently to a pipe for the injection of fluids, and an outlet connected to a discharge pipe, the two inlets communicating permanently with each other through the filter element and the pores of the rock are selectively blocked by the injection of a clogging substance at a well-defined pressure chosen according to the capillary pressure prevailing in the pores to be blocked.

6. Ultrafiltration device according to Claim 5, **characterised in that** the filter element of the device is cut from a sample of source rock with micropores having a mean diameter typically smaller than a few tens of Ångströms.

7. Ultrafiltration device according to Claim 5 or Claim 6, **characterised in that** it includes inside the housing at least a second filter element, made from porous substances, stacked on the filter element made from the source rock.

8. Ultrafiltration device according to Claim 7, **characterised in that** the second filter element is made from porous substances.

9. Ultrafiltration device according to Claim 8, **characterised in that** the second filter element is cut from a porous rock having mean pore sizes different from those of the first filter element.

10. Application of the ultrafiltration device according to one of Claims 5 to 9 for the filtration of heavy fractions such as resins or asphaltenes in suspension in oil fluids.

11. Application of the ultrafiltration device according to one of Claims 5 to 9 for the filtration of polymers or proteins.
